# EUROPÄISCHE PATENTSCHRIFT

(11) **EP 2 679 359 B1**
(45) Veröffentlichungstag und Bekanntmachung des Hinweises auf die Patenterteilung: **21.12.2016**
(21) Anmeldenummer: 13170549.3
(22) Anmeldetag: 05.06.2013
(51) Int. Cl.: B27B 19/00

(54) **Tiefenanschlag für oszillierendes Werkzeug**
Depth stop for an oscillating tool
Butée de profondeur pour outil oscillant

(30) Priorität: 25.06.2012 DE 102012105520
(43) Veröffentlichungstag der Anmeldung: 01.01.2014
(73) Patentinhaber: C. & E. Fein GmbH, 73529 Schwäbisch Gmünd-Bargau (DE)
(72) Erfinder: Bek, Fabian, 73560 Böbingen (DE); Weber, Heinrich, 73527 Schwäbisch Gmünd (DE)
(74) Vertreter: Meitinger, Thomas Heinz

(56) Entgegenhaltungen:
- EP-A1- 1 857 223
- WO-A1-2008/013680
- DE-C1- 19 938 106
- US-A- 2 984 270
- US-A- 4 318 224
- US-B1- 6 363 617

## Beschreibung

### GEBIET DER ERFINDUNG

Die vorliegende Erfindung betrifft einen Tiefenanschlag für ein oszillierendes Werkzeug, ein oszillierendes Werkzeug und ein System zur oszillierenden Bearbeitung eines Werkstücks.

### HINTERGRUND DER ERFINDUNG

Im Stand der Technik sind oszillierende Werkzeuge bekannt, die einen Tiefenanschlag aufweisen, mit dem eine vorbestimmte Eindringtiefe etwa beim Sägen in ein zu bearbeitendes Werkstück sichergestellt werden kann. Es ist bekannt, dass solche Tiefenanschläge mit einer Auflagefläche zur Führung des Tiefenanschlages auf einer Werkstückoberfläche ausgestattet sein können.

Aus dem Dokument WO2008013680 ist ein Tiefenanschlag gemäß dem Oberbegriff des Anspruchs 1 bekannt.

### ZUSAMMENFASSUNG DER ERFINDUNG

Bei einem Tiefenanschlag, der mit einem Werkzeug fest verbunden ist, kann es insbesondere in räumlich beengten Arbeitsstätten notwendig werden, die Fixierung zwischen Werkzeug und Tiefenanschlag mehrmals je nach aktuellem Raumangebot beim Bearbeitungsprozess zu lösen und neu zu fixieren. Hierdurch kann eine Bearbeitung eines Werkstücks erschwert werden. Außerdem führt eine fixe Verbindung zwischen Werkzeug und Tiefenanschlag dazu, dass das Werkzeug während der Bearbeitung nicht bewegt werden kann. Beispielsweise ein "Freischaukeln" bzw. "Freihebeln" des Sägeblatts ist dadurch ausgeschlossen, was wiederum zu einer unerwünschten Temperaturerhöhung des Sägeblattes führen kann.

Eine Aufgabe ist daher, einen Tiefenanschlag für ein oszillierendes Werkzeug zur Verfügung zu stellen, der eine Relativdrehung zwischen Werkzeug und Tiefenanschlag um die Bewegungsachse des Sägeblatts auch bei fixierter Tiefeneinstellung erlaubt.

In oszillierende Werkzeuge können gekröpfte oder gerade Sägeblätter eingespannt werden. Beispielsweise beim Umrüsten von einem gekröpften Sägeblatt auf ein gerades Sägeblatt, kann sich ein anderer Abstand des Werkzeugs zum Sägeblatt ergeben, wodurch ein eventuell vorhandener Anschlag zur Positionierung des Sägeblatts zum zu bearbeitenden Werkstück neu eingestellt werden muss. Eine Neueinstellung eines Anschlags kann zeitaufwändig sein.

Eine weitere Aufgabe ist daher, eine Vorrichtung für ein oszillierendes Werkzeug zur Verfügung zu stellen, die das Einstellen eines Anschlags erleichtert oder sogar unnötig macht, insbesondere bei einem Umrüsten des Werkzeugs von einem gekröpften Sägeblatt auf ein gerades Sägeblatt bzw. umgekehrt.

Als erste Ausführungsform der Erfindung wird ein Tiefenanschlag für ein oszillierendes Werkzeug zur Verfügung gestellt, wobei in das Werkzeug ein Sägeblatt zur Bearbeitung eines Werkstücks einspannbar ist, wobei der Tiefenanschlag aufweist: einen Abstandshalter zum Einstellen einer Eindringtiefe des Sägeblatts in das Werkstück, eine Halteeinrichtung an dem der Abstandshalter fixierbar ist und ein Befestigungsteil an dem die Halteeinrichtung montierbar ist, wobei das Befestigungsteil mit dem Werkzeug fest verbindbar oder fest verbunden ist, wobei in einem ersten Zustand das Befestigungsteil zur Halteeinrichtung unbeweglich ist und wobei in einem zweiten Zustand das Befestigungsteil zur Halteeinrichtung zumindest um oder entlang einer Bewegungsachse drehbar oder bewegbar ist.

Die Ausführungsform schafft eine Bewegungsmöglichkeit zwischen Werkzeug und Werkstück bzw. Tiefenanschlag, wodurch eine Anpassung an räumliche Gegebenheiten der Arbeitsstätte ermöglicht wird. Außerdem kann ein "Freihebeln" des Sägeblatts, beispielsweise bei "Festfressen" des Sägeblatts in dem Werkstück, bzw. ein Unterstützen der Spananfuhr ermöglicht werden. Eine maximale Eindringtiefe des Sägeblatts in das Werkstück bleibt dabei gewahrt. Ist eine Bewegung zwischen Werkzeug und Tiefenanschlag nicht gewünscht, erlaubt die Ausführungsform die Einstellung einer starren Verbindung zwischen Werkzeug und Tiefenanschlag.

Als zweite Ausführungsform der Erfindung wird ein oszillierendes Werkzeug zur Verfügung gestellt, umfassend einen Tiefenanschlag nach einem der Ansprüche 1 bis 5.

Als dritte Ausführungsform der Erfindung wird ein System zur oszillierenden Bearbeitung eines Werkstücks zur Verfügung gestellt, umfassend: ein Werkzeug nach Anspruch 6 mit einem ersten Gleitelement und eine Führungsschiene mit einem zweiten Gleitelement, wobei das erste Gleitelement zum zweiten Gleitelement in Eingriff bringbar oder gebracht ist, wodurch das Werkzeug durch die Führungsschiene lagerbar und/oder führbar ist.

Beispielhafte Ausführungsformen werden in den abhängigen Ansprüchen beschrieben.

Gemäß einer beispielhaften Ausführungsform der Erfindung wird ein Tiefenanschlag zur Verfügung gestellt, wobei die Halteeinrichtung einen ersten ringförmigen Bereich mit einer ersten Drehachse aufweist, wobei der erste ringförmige Bereich mit einem zweiten ringförmigen Bereich des Befestigungsteils mit zweiter Drehachse zusammenwirkbar ist.

Durch das Zusammenwirken des ersten ringförmigen Bereichs mit dem zweiten ringförmigen Bereich kann insbesondere eine Drehbewegung des Werkzeugs bezüglich des festgestellten und fixierten Tiefenanschlags ermöglicht werden.

In einer weiteren erfindungsgemäßen Ausführungsform wird ein Tiefenanschlag zur Verfügung gestellt, wobei im zweiten Zustand das Befestigungsteil um die Halteeinrichtung drehbar ist, wobei die Bewegungsachse der ersten und der zweiten Drehachse entspricht.

Gemäß einer beispielhaften Ausführungsform der Erfindung wird ein Tiefenanschlag zur Verfügung gestellt, wobei im ersten Zustand der erste ringförmige Bereich mit dem zweiten ringförmigen Bereich verspannt ist.

Vorteilhafterweise kann wahlweise eine feste, steife Verbindung zwischen Werkzeug und Tiefenanschlag hergestellt werden, wobei das Werkzeug keine Bewegungsmöglichkeit bezüglich des Tiefenanschlags aufweist.

Gemäß einem weiteren Ausführungsbeispiel der vorliegenden Erfindung wird ein Tiefenanschlag zur Verfügung gestellt, wobei der Abstandshalter eine Auflagefläche umfasst, wobei die Auflagefläche einen ersten Breitenabstand entlang der Breite der Auflagefläche ausgehend von der Längsachse hin zu einem Ende der Auflagefläche und einen zweiten Breitenabstand entlang der Breite der Auflagefläche ausgehend von der Längsachse hin zu dem entgegengesetzten Ende der Auflagefläche aufweist, wobei der erste Breitenabstand unterschiedlich zum zweiten Breitenabstand ist.

Durch unterschiedliche Breitenabstände der Auflagefläche können unterschiedliche Abstände zu einem noch anzulegenden Anschlag erzeugt werden, wodurch eine fluchtende Ausrichtung eines Sägeblatts, das in dem Werkzeug eingespannt ist, sichergestellt werden kann. Dies ist beispielsweise bei einem Umrüsten eines gekröpften Sägeblatts auf ein gerades Sägeblatt bzw. umgekehrt vorteilhaft, insbesondere in Kombination mit einer Führungsschiene.

Gemäß einem weiteren Ausführungsbeispiel der vorliegenden Erfindung wird ein System zur Verfügung gestellt, wobei das erste Gleitelement zum zweiten Gleitelement komplementär ausgebildet ist.

Durch eine komplementäre Ausbildung des ersten Gleitelements zum zweiten Gleitelement kann ein einfaches Ineinandergreifen der einzelnen Systemelemente sichergestellt werden.

Gemäß einer beispielhaften Ausführungsform der Erfindung wird ein System zur Verfügung gestellt, wobei das erste Gleitelement oder das zweite Gleitelement eine T-Nut, eine Ausnehmung für einen Schwalbenschwanz oder eine u-förmige Ausbildung ist und wobei das zweite Gleitelement oder das erste Gleitelement eine Auflagefläche für die T-Nut, ein Schwalbenschwanz für die Ausnehmung oder ein Steg ist.

Eine Kombination einer T-Nut mit einer Auflagefläche für die T-Nut bzw. eine Ausnehmung für einen Schwalbenschwanz und ein Schwalbenschwanz bzw. ein Steg und eine komplementäre U-Form für den Steg stellt eine herstellungstechnisch kostengünstige Realisierung einer Situation eines passgenauen Ineinandergreifens einzelner Systemelemente dar.

Gemäß einer beispielhaften Ausführungsform der Erfindung wird ein System zur Verfügung gestellt, wobei die Führungsschiene an einer und/oder an beiden Seiten einen Abschnitt zur fluchtenden Anordnung eines in dem Werkzeug eingespannten Sägeblatts aufweist.

Durch die Anordnung eines überstehenden Abschnitts kann beispielsweise der Tatsache Rechnung getragen werden, dass in das Werkzeug gerade oder gekröpfte Sägeblätter eingespannt werden können. Wird ein gekröpftes Sägeblatt eingespannt, so kann die Führungsschiene derart gedreht werden, dass zwischen Werkzeug und Sägeblatt der überstehende Abschnitt angeordnet ist. Wird in das Werkzeug ein gerades Sägeblatt eingespannt, so kann die Führungsschiene derart verwendet werden, dass kein überstehender Abschnitt zwischen Werkzeug und Sägeblatt angeordnet ist. Hierdurch kann eine fluchtende Ausrichtung des Sägeblatts zur Führungsschiene in verschiedenen Situationen (gekröpftes Sägeblatt oder gerades Sägeblatt ist im Werkzeug eingespannt) sichergestellt werden.

Als eine Idee der Erfindung kann angesehen werden, einen Tiefenanschlag für ein oszillierendes Werkzeug zur Verfügung zu stellen, das auch bei fixierter Einstellung des Tiefenanschlags eine begrenzte Bewegungsmöglichkeit eröffnet und wobei außerdem eine schnelle und einfache Anpassung an eine geänderte Arbeitssituation beim Ersetzen/Umrüsten beispielsweise eines geraden Sägeblatts durch ein gekröpftes Sägeblatt ermöglicht wird.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1 ein oszillierendes Werkzeug mit einem Tiefenanschlag,
Fig. 2 einen Tiefenanschlag mit einer Auflagefläche, einer Halteeinrichtung und einem Befestigungsteil zur Montage an dem oszillierenden Werkzeug,
Fig. 3 eine Explosionsdarstellung des Tiefenanschlags mit der Auflagefläche, der Halteeinrichtung und dem Befestigungsteil zur Montage an dem oszillierenden Werkzeug,
Fig. 4 ein oszillierendes Werkzeug, das in einer Führungsschiene geführt ist, wobei in dem Werkzeug ein gekröpftes Sägeblatt eingespannt ist,
Fig. 5 ein weiteres oszillierendes Werkzeug, das in der Führungsschiene geführt ist, wobei in dem Werkzeug ein gerades Sägeblatt eingespannt ist,
Fig. 6 ein weiteres oszillierendes Werkzeug, das in der Führungsschiene geführt ist, wobei in dem Werkzeug ein gekröpftes Sägeblatt eingespannt ist,
Fig. 7 ein weiteres oszillierendes Werkzeug, das in der Führungsschiene geführt ist, wobei in dem Werkzeug ein gerades Sägeblatt eingespannt ist,
Fig. 8 ein weiteres oszillierendes Werkzeug, das in der Führungsschiene geführt ist, wobei in dem Werkzeug ein gekröpftes Sägeblatt eingespannt ist,
Fig. 9 eine Auflagefläche in einer Draufsicht (von einem entsprechenden Werkzeug betrachtet).

### DETAILLIERTE BESCHREIBUNG BEISPIELHAFTER AUSFÜHRUNGSFORMEN

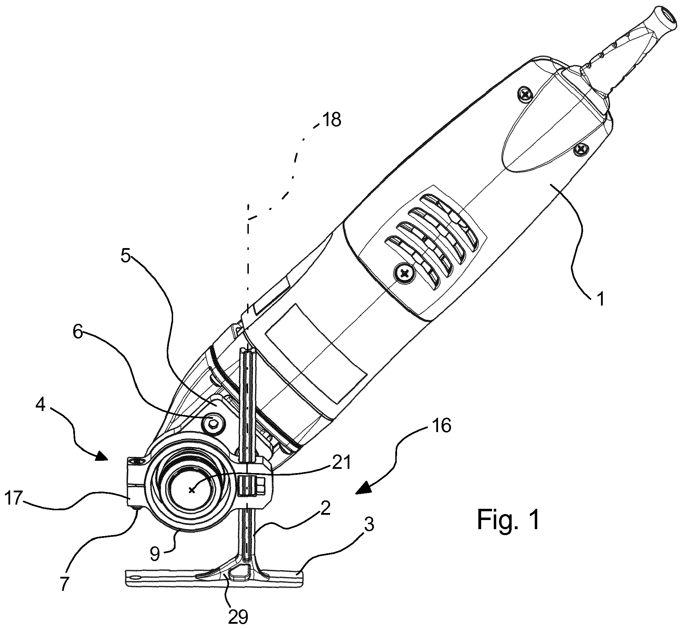

Fig. 1 zeigt ein oszillierendes Werkzeug mit einem Tiefenanschlag 16, der eine Auflagefläche 3, einen Abstandshalter 2, eine Halteeinrichtung 9 und ein Befestigungsteil 5 umfasst. Die Auflagefläche 3 dient dem sicheren Halt des Werkzeugs. Durch eine Einstellung des Abstandshalters 2 kann eine exakte Bearbeitung und Eindringtiefe bei der Bearbeitung eines Werkstücks sichergestellt werden. Der Abstandshalter 2 ist an einer Halteeinrichtung 9 fixiert. Die Halteeinrichtung 9 ist mittels einer Klemmvorrichtung 4, die Klemmbacken 17 aufweist, mit dem Befestigungsteil 5 verbunden. Durch eine Klemmschraube 7 können die Klemmbacken 17 zusammengezogen werden und die Halteeinrichtung 9 mit dem Befestigungsteil 5 verspannt werden. Wahlweise können die Klemmbacken 17 nur leicht angezogen werden, wodurch die Halteeinrichtung 9 zum Befestigungsteil 5 beweglich bleibt und das Werkzeug 1 um die Drehachse 21 bei unveränderlich eingestelltem Tiefenanschlag verdreht werden kann. Das Befestigungsteil 5 kann beispielsweise mit Schrauben 6 am Werkzeug 1 fest verbunden werden.

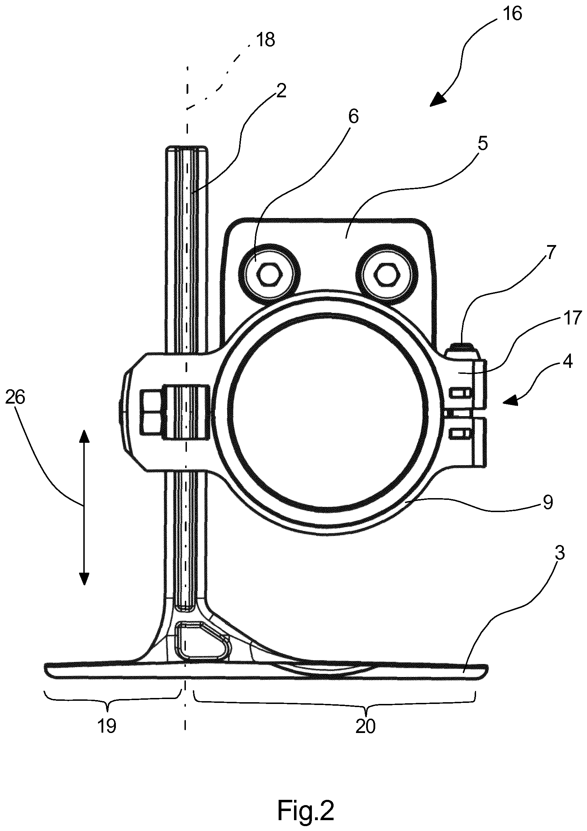

Fig. 2 zeigt einen Tiefenanschlag 16 mit einer Auflagefläche 3, einer Halteeinrichtung 9, an dem der Abstandshalter 2 montiert werden kann und das Befestigungsteil 5, das mit einem entsprechenden Werkzeug (nicht gezeigt) fest verbunden werden kann. Die Halteeinrichtung 9 kann durch die Klemmbacken 17 der Klemmvorrichtung 4 mit dem Befestigungsteil 5 wahlweise fest oder noch beweglich verklemmt werden. Die Bearbeitungstiefe kann durch Verstellung des Abstands des Werkzeugs zur Auflagefläche 3 entlang der Verfahrrichtung 26 eingestellt werden.

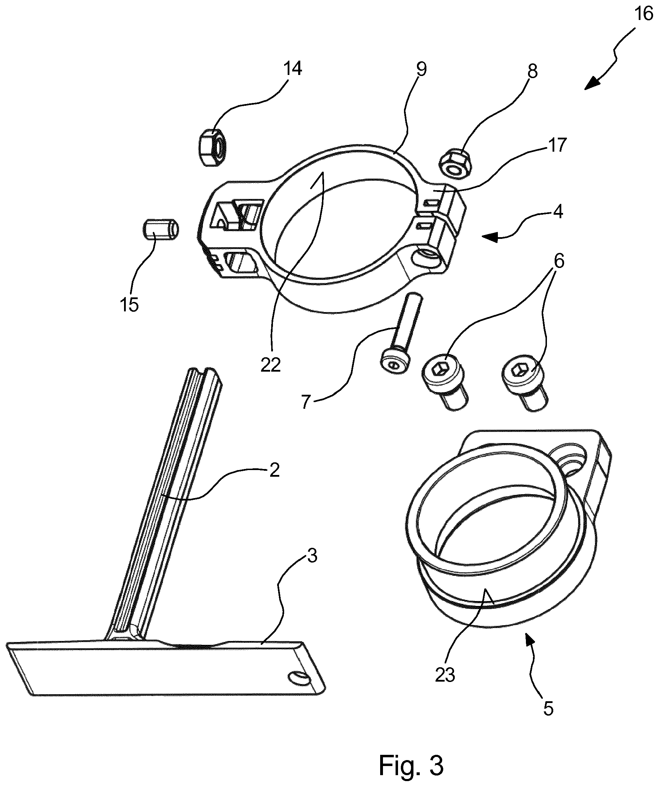

Fig. 3 zeigt den Tiefenanschlag 16 mit der Auflagefläche 3, der Halteeinrichtung 9 und dem Befestigungsteil 5 in einer Explosionsdarstellung. Der Abstandshalter 2 kann mit Feststellelementen 14, 15 mit der Halteeinrichtung 9 fest verbunden werden, wodurch ein Abstand der Schneiden bzw. des Sägeblatts des Werkzeugs zum Werkstück definiert wird. Die Halteeinrichtung 9 kann auf das Befestigungsteil 5 aufgesetzt werden und mit diesem durch beispielsweise eine Schraube 7 und eine Mutter 8 verklemmt/verspannt oder nur miteinander angeheftet werden. Das Befestigungsteil 5 kann durch Schrauben 6 mit dem entsprechenden Werkzeug (nicht dargestellt) verbunden werden. Werden die Klemmbacken 17 der Klemmvorrichtung 4 durch die Klemmschraube 7 nur leicht zusammengezogen, wird zwar eine feste Verbindung zwischen Werkzeug und Tiefenanschlag erreicht, trotzdem kann in diesem Zustand ein ringförmiger Bereich 22 der Halteeinrichtung 9 mit dem ringförmigen Bereich 23 des Befestigungsteils 5 derart zusammenwirkbar sein, dass das Werkzeug bezüglich des Tiefenanschlags 16 bei eingestelltem Abstand des Werkstücks zu den Schneiden bzw. zu dem Sägeblatt des Werkzeugs verdreht werden kann.

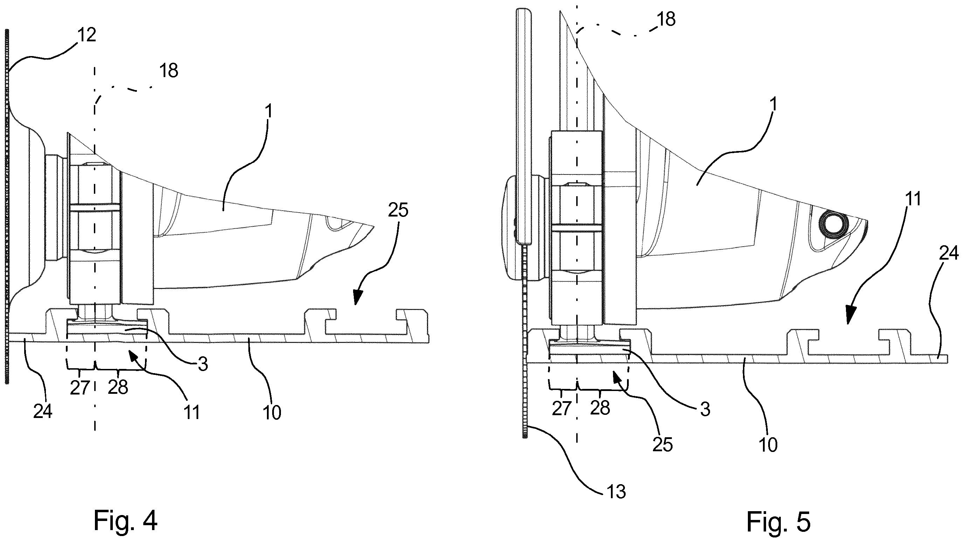

Fig. 4 zeigt ein Werkzeug 1 mit einem gekröpften Sägeblatt 12, das durch eine Führungsschiene 10 mit einer T-Nut 11 geführt werden kann. Hierbei ist die Führungsschiene 10 derart angeordnet, und zwar bezüglich des überstehenden Abschnitts/Hervorsprungs 24, dass der größere Abstand des gekröpften Sägeblatts 12 zum Werkzeug 1, im Vergleich zu einem geraden Sägeblatt, ausgeglichen werden kann und das Sägeblatt 12 an der Kante der Führungsschiene 10 fluchtend geführt werden kann.

Fig. 5 zeigt ein Werkzeug 1 mit einem geraden Sägeblatt 13, das durch die Führungsschiene 10 geführt werden kann. Hierbei ist die Führungsschiene 10 um 180° im Vergleich zur Fig. 4 gedreht, wodurch der überstehende Abschnitt 24 nach rechts versetzt ist (gemäß der Zeichenebene). Durch die unsymmetrische Ausbildung der Führungsschiene 10 mit dem überstehenden Abschnitt 24 kann daher einem Umrüsten von einem gekröpften Sägeblatt auf ein gerades Sägeblatt Rechnung getragen werden.

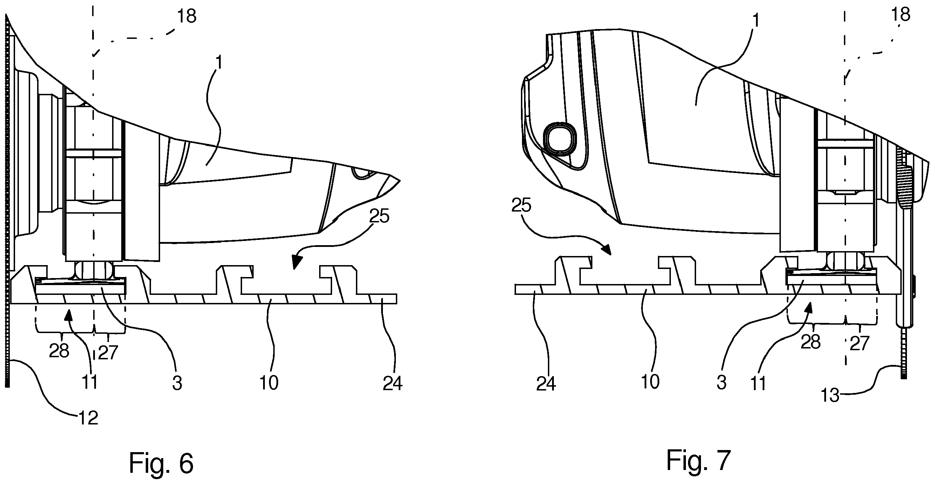

Fig. 6 zeigt eine Führungsschiene 10 in einem Längsschnitt und ein Werkzeug 1 in einer Längsansicht, wobei die Auflagefläche 3 in die T-Nut 11 eingreift. Das Werkzeug 1 wird durch die T-Nut 11 geführt. Die Auflagefläche 3 weist einen unterschiedlichen Breitenversatz mit einem ersten Breitenabstand 27 und einem zweiten Breitenabstand 28 von der Längsachse 18 auf. Hierdurch kann der Abstand des Sägeblatts 12 zur Führungsschiene 10, je nachdem, ob der erste Breitenabstand 27 oder der zweite Breitenabstand 28 nach links zeigt (bezüglich Darstellung in Fig. 6), derart eingestellt werden, dass das Sägeblatt fluchtend zur Führungsschiene 10 angeordnet/ausgerichtet ist.

Fig. 7 zeigt ein Werkzeug 1 mit einer Auflagefläche 3, wobei der erste Breitenabstand 27 zum Sägeblatt 13 weist und der zweite Breitenabstand 28 vom Sägeblatt 13 fortzeigt. Durch die Anordnung der Auflagefläche 3 mit nach vorne weisendem erstem Breitenabstand 27 kann eine fluchtende Anordnung des Sägeblatts 13 bezüglich der Führungsschiene 10 sichergestellt werden.

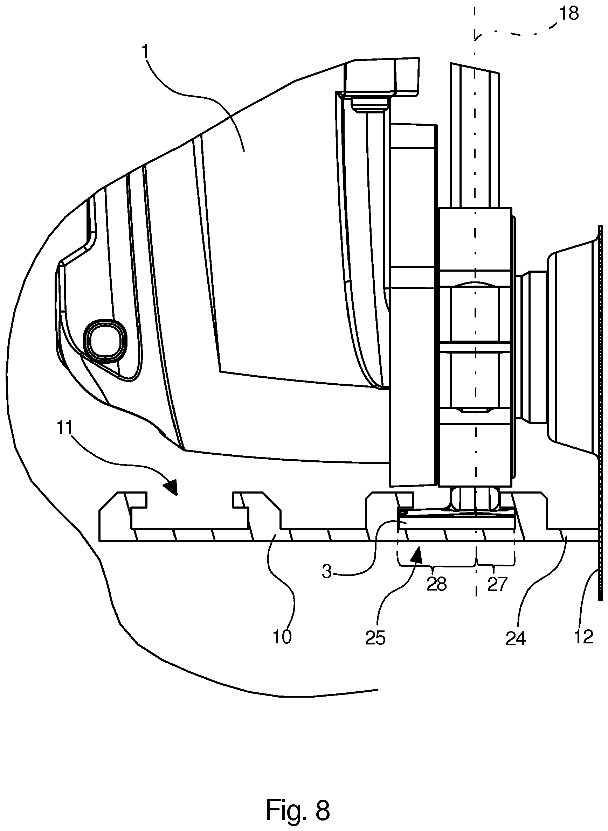

Fig. 8 zeigt ein Werkzeug 1 mit einer Auflagefläche 3 mit einem ersten Breitenabstand 27, der zum Sägeblatt 12 zeigt. Die Führungsschiene 10 weist einen Hervorsprung 24 auf. Insgesamt können daher 4 Situationen erzeugt werden, um eine fluchtende Ausrichtung des betreffenden Sägeblatts bezüglich einer Führungsschiene zu erreichen. Die erste Situation wäre kein Hervorsprung der Führungsschiene zwischen Werkzeug und Sägeblatt und der erste Breitenabstand zum Sägeblatt weisend. Die zweite Situation wäre kein Hervorsprung der Führungsschiene zwischen Werkzeug und Sägeblatt und der zweite Breitenabstand zum Sägeblatt weisend. Die dritte Situation wäre ein Hervorsprung der Führungsschiene zwischen Werkzeug und Sägeblatt und der erste Breitenabstand zum Sägeblatt weisend. Die vierte Situation wäre ein Hervorsprung der Führungsschiene zwischen Werkzeug und Sägeblatt und der zweite Breitenabstand zum Sägeblatt weisend.

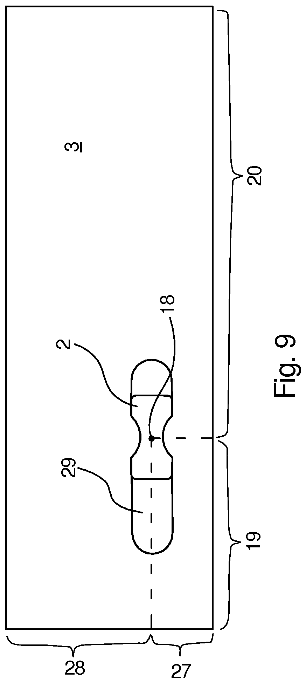

Fig. 9 zeigt eine Auflagefläche 3 mit einem ersten Breitenabstand 27 und einem zweiten Breitenabstand 28 und einem ersten Längenabstand 19 und einem zweiten Längenabstand 20, wobei die Abstände jeweils von der Längsachse 18 ausgehen und an der jeweiligen Kante der Auflagefläche 3 enden.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: oszillierendes Werkzeug
- 2: Abstandshalter
- 3: Auflagefläche
- 4: Klemmvorrichtung
- 5: Befestigungsteil
- 6: Schraube
- 7: Klemmschraube
- 8: Mutter
- 9: Halteeinrichtung
- 10: Führungsschiene
- 11: T-Nut
- 12: Sägeblatt
- 13: Sägeblatt
- 14: Feststellelement
- 15: Feststellelement
- 16: Tiefenanschlag
- 17: Klemmbacke
- 18: Längsachse des Abstandshalters
- 19: erster Längenabstand
- 20: zweiter Längenabstand
- 21: Bewegungsachse
- 22: erster ringförmiger Bereich
- 23: zweiter ringförmiger Bereich
- 24: Abschnitt/Hervorsprung der Führungsschiene
- 25: T-Nut
- 26: Verstellrichtung
- 27: erster Breitenabstand
- 28: zweiter Breitenabstand
- 29: Fuß des Abstandshalters

## Patentansprüche

1. Tiefenanschlag (16) für ein oszillierendes Werkzeug (1), wobei in das Werkzeug (1) ein Sägeblatt zur Bearbeitung eines Werkstücks einspannbar ist, wobei der Tiefenanschlag (16) aufweist
einen Abstandshalter (2) zum Einstellen einer Eindringtiefe des Sägeblatts in das Werkstück,
eine Halteeinrichtung (9) an dem der Abstandshalter (2) fixierbar ist und
ein Befestigungsteil (5) an dem die Halteeinrichtung (9) montierbar ist, wobei das Befestigungsteil (5) mit dem Werkzeug (1) fest verbindbar oder fest verbunden ist, **dadurch gekennzeichnet, dass**
die Halteeinrichtung (9) einen ersten ringförmigen Bereich (22) mit einer ersten Drehachse aufweist, wobei in einem ersten Zustand das Befestigungsteil (5) zur Halteeinrichtung (9) unbeweglich ist und wobei in einem zweiten Zustand das Befestigungsteil (5) zur Halteeinrichtung (9) um die Drehachse drehbar ist, wobei der Abstandshalter (2) mit der Halteeinrichtung (9) starr fixiert ist.

2. Tiefenanschlag (16) nach Anspruch 1, **dadurch gekennzeichnet, dass** der erste ringförmige Bereich (22) mit einem zweiten ringförmigen Bereich (23) des Befestigungsteils (5) mit zweiter Drehachse zusammenwirkbar ist.

3. Tiefenanschlag (16) nach Anspruch 2, **dadurch gekennzeichnet, dass** im zweiten Zustand das Befestigungsteil (5) um die Halteeinrichtung (9) drehbar ist, wobei die Bewegungsachse (21) der ersten und der zweiten Drehachse entspricht.

4. Tiefenanschlag (16) nach einem der Ansprüche 2 oder 3, **dadurch gekennzeichnet, dass** im ersten Zustand der erste ringförmige Bereich (22) mit dem zweiten ringförmigen Bereich (23) verspannt ist.

5. Tiefenanschlag (16) nach einem der vorhergehenden Ansprüche, **dadurch gekennzeichnet, dass** der Abstandshalter (2) eine Auflagefläche (3) umfasst, wobei die Auflagefläche (3) einen ersten Breitenabstand (27) entlang der Breite der Auflagefläche (3) ausgehend von der Längsachse (18) hin zu einem Ende der Auflagefläche (3) und einen zweiten Breitenabstand (28) entlang der Breite der Auflagefläche (3) ausgehend von der Längsachse (18) hin zu dem entgegengesetzten Ende der Auflagefläche (3) aufweist, wobei der erste Breitenabstand (27) unterschiedlich zum zweiten Breitenabstand (28) ist.

6. Oszillierendes Werkzeug umfassend einen Tiefenanschlag nach einem der vorhergehenden Ansprüche.

7. System zur oszillierenden Bearbeitung eines Werkstücks, umfassend
ein Werkzeug nach Anspruch 6 mit einem ersten Gleitelement (3) und
eine Führungsschiene (10) mit einem zweiten Gleitelement (11, 25),
**dadurch gekennzeichnet, dass**
das erste Gleitelement (3) zum zweiten Gleitelement in Eingriff bringbar oder gebracht ist, wodurch das Werkzeug durch die Führungsschiene (10) lagerbar und/oder führbar ist.

8. System nach Anspruch 7, **dadurch gekennzeichnet, dass** das erste Gleitelement zum zweiten Gleitelement komplementär ausgebildet ist.

9. System nach Anspruch 8, **dadurch gekennzeichnet, dass** das erste Gleitelement oder das zweite Gleitelement eine T-Nut, eine Ausnehmung für einen Schwalbenschwanz oder eine u-förmige Ausbildung ist und wobei das zweite Gleitelement oder das erste Gleitelement eine Auflagefläche (3) für die T-Nut, ein Schwalbenschwanz für die Ausnehmung oder ein Steg ist.

10. System nach einem der Ansprüche 7 bis 9, **dadurch gekennzeichnet, dass** die Führungsschiene (10) an einer und/oder an beiden Seiten einen Abschnitt (24) zur fluchtenden Anordnung eines in dem Werkzeug eingespannten Sägeblatts aufweist.

## Claims

1. Depth stop (16) for an oscillating tool (1), wherein a saw blade for machining a workpiece is able to be clamped in the tool (1), wherein the depth stop (16) has
a spacer (2) for setting a penetration depth of the saw blade into the workpiece,
a retaining device (9) to which the spacer (2) is able to be fixed, and
a fastening part (5) on which the retaining device (9) is able to be mounted, wherein the fastening part (5) is firmly connectable or firmly connected to the tool (1),
**characterized in that**
the retaining device (9) has a first annular region (22) with a first rotation axis, wherein, in a first state, the fastening part (5) is immobile with respect to the retaining device (9) and wherein, in a second state, the fastening part (5) is rotatable about the rotation axis (21) with respect to the retaining device (9), wherein the spacer (2) is rigidly fixed to the retaining device (9).

2. Depth stop (16) according to Claim 1, **characterized in that** the first annular region (22) is able to cooperate with a second annular region (23) of the fastening part (5) with a second rotation axis.

3. Depth stop (16) according to Claim 2, **characterized in that**, in the second state, the fastening part (5) is rotatable about the retaining device (9), wherein the movement axis (21) corresponds to the first and the second rotation axis.

4. Depth stop (16) according to either of Claims 2 and 3, **characterized in that**, in the first state, the first annular region (22) is braced with the second annular region (23).

5. Depth stop (16) according to one of the preceding claims, **characterized in that** the spacer (2) comprises a bearing surface (3), wherein the bearing surface (3) has a first width separation (27) along the width of the bearing surface (3) starting from the longitudinal axis (18) towards one end of the bearing surface (3) and a second width separation (28) along the width of the bearing surface (3) starting from the longitudinal axis (18) towards the opposite end of the bearing surface (3), wherein the first width separation (27) is different from the second width separation (28).

6. Oscillating tool comprising a depth stop according to one of the preceding claims.

7. System for the oscillating machining of a workpiece, comprising
a tool according to Claim 6 having a first sliding element (3) and a guide rail (10) having a second sliding element (11, 25),
**characterized in that**
the first sliding element (3) is able to be brought or is brought into engagement with the second sliding element, with the result that the tool is able to be supported and/or guided by the guide rail (10).

8. System according to Claim 7, **characterized in that** the first sliding element is configured in a complementary manner to the second sliding element.

9. System according to Claim 8, **characterized in that** the first sliding element or the second sliding element is a T-slot, a recess for a dovetail or a U-shaped formation, and wherein the second sliding element or the first sliding element is a bearing surface (3) for the T-slot, a dovetail for the recess or a rib.

10. System according to one of Claims 7 to 9, **characterized in that** the guide rail (10) has, on one and or on both sides, a portion (24) for the aligned arrangement of a saw blade clamped in the tool.

## Revendications

1. Butée de profondeur (16) pour un outil oscillant (1), dans laquelle une lame de scie pour l'usinage d'une pièce peut être montée dans l'outil (1), dans laquelle la butée de profondeur (16) présente
un élément d'écartement (2) pour le réglage de la profondeur de pénétration de la lame de scie dans la pièce,
un dispositif de maintien (9) auquel l'élément d'écartement (2) peut être fixé, et une partie de fixation (5) sur laquelle le dispositif de maintien (9) peut être monté, dans laquelle la partie de fixation (5) est ou peut être assemblée fixement à l'outil (1),
**caractérisée en ce que** le dispositif de maintien (9) présente une première région annulaire (22) avec un premier axe de rotation, dans laquelle dans un premier état la partie de fixation (5) est immobile par rapport au dispositif de maintien (9) et dans laquelle dans un deuxième état la partie de fixation (5) peut tourner autour de l'axe de rotation (21) par rapport au dispositif de maintien (9), dans laquelle l'élément d'écartement (2) est fixé de façon rigide au dispositif de maintien (9).

2. Butée de profondeur (16) selon la revendication 1, **caractérisée en ce que** la première région annulaire (22) peut coopérer avec une deuxième région annulaire (23) de la partie de fixation (5) avec un deuxième axe de rotation.

3. Butée de profondeur (16) selon la revendication 2, **caractérisée en ce que** dans le deuxième état la partie de fixation (5) peut tourner autour du dispositif de maintien (9), dans laquelle l'axe de mouvement (21) correspond au premier et au deuxième axes de rotation.

4. Butée de profondeur (16) selon une des revendications 2 ou 3, **caractérisée en ce que** dans le premier état la première région annulaire (22) est serrée avec la deuxième région annuaire (23).

5. Butée de profondeur (16) selon l'une quelconque des revendications précédentes, **caractérisée en ce que** l'élément d'écartement (2) comprend une face d'appui (3), dans laquelle la face d'appui (3) présente une première distance de largeur (27) le long de la largeur de la face d'appui (3) depuis l'axe longitudinal (18) jusqu'à une extrémité de la face d'appui (3) et une deuxième distance de largeur (28) le long de la largeur de la face d'appui (3) depuis l'axe central (18) jusqu'à l'extrémité opposée de la face d'appui (3), dans laquelle la première distance de largeur (27) est différente de la deuxième distance de largeur (28).

6. Outil oscillant comprenant une butée de profondeur selon l'une quelconque des revendications précédentes.

7. Système permettant l'usinage oscillant d'une pièce, comprenant
un outil selon la revendication 6 avec un premier élément glissant (3) et
un rail de guidage (10) avec un deuxième élément glissant (11, 25),
**caractérisé en ce que** le premier élément glissant (3) est ou peut être mis en prise avec le deuxième élément glissant, l'outil pouvant ainsi être supporté et/ou guidé par le rail de guidage (10).

8. Système selon la revendication 7, **caractérisé en ce que** le premier élément glissant est de forme complémentaire au deuxième élément glissant.

9. Système selon la revendication 8, **caractérisé en ce que** le premier élément glissant ou le deuxième élément glissant est une rainure en T, un évidement pour une queue d'aronde ou un profilage en u et dans lequel le deuxième élément glissant ou le premier élément glissant est une face d'appui (3) pour la rainure en T, une queue d'aronde pour l'évidement ou une nervure.

10. Système selon l'une quelconque des revendications 7 à 9, **caractérisé en ce que** le rail de guidage (10) présente sur un côté et/ou sur les deux côtés une partie (24) permettant le placement en alignement d'une lame de scie serrée dans l'outil.
